# EUROPEAN PATENT SPECIFICATION

(11) **EP 4 632 521 B1**
(45) Date of publication and mention of the grant of the patent: **18.03.2026**
(21) Application number: 24169847.1
(22) Date of filing: 12.04.2024
(51) Int. Cl.: G05D 1/81, B63H 25/06, G05D 105/60, G05D 107/00, G05D 109/30

(54) **AUTOPILOT CONTROL OF A MARINE VESSEL**
AUTOPILOTSTEUERUNG EINES WASSERFAHRZEUGS
COMMANDE DE PILOTAGE AUTOMATIQUE D'UN NAVIRE

(43) Date of publication of application: 15.10.2025
(73) Proprietor: CPAC Systems AB, 401 23 Göteborg (SE)
(72) Inventor: Raimer, Peter, 421 57 Västra Frölunda (SE)
(74) Representative: Ström & Gulliksson AB

(56) References cited:
- EP-A1- 3 187 952
- US-A1- 2017 205 828
- US-A1- 2024 092 472

## Description

### TECHNICAL FIELD

The disclosure relates generally to control systems for marine vessel. In particular aspects, the disclosure relates to autopilot control of a marine vessel. The disclosure can be applied to marine vessels, such as leisure boats, ships, cruise ships, fishing vessels, yachts, ferries, among other vehicle types. Although the disclosure may be described with respect to a particular marine vessel, the disclosure is not restricted to any particular marine vessel.

### BACKGROUND

Marine autopilot systems are used for reducing the manual navigational burden during voyages, yet existing methods for autopilot re-engagement after manual intervention often lack the responsiveness and adaptability required in dynamic marine environments. The challenges presented by these systems, such as delays in re-engagement and the influence of environmental factors on navigational heading, can lead to inefficiencies and potential safety risks. There is a pressing need for an improved approach to autopilot re-engagement that enhances operational effectiveness and aligns with the complex conditions encountered at sea.

It is in view these realizations and others that the present inventor is herein suggesting one or more improvements to the prior art of marine vessel autopilot systems.

US 2017/205828 A1 describes a marine autopilot system that autonomously steers a vessel's rudder, disengaging when helm movement exceeds a predetermined threshold and re-engaging when the vessel's heading stabilizes within certain parameters over a specified time period.

US 2024/092472 A1 describes a marine autopilot system that operates by controlling a rudder steering mechanism to lock rudders at a fixed angle while dynamically adjusting the power supply to electric motors to maintain course.

EP 3 187 952 A1 describes a hydraulically actuated autopilot release system for mobile structures that uses control surface angles and autopilot control surface demands to generate an autopilot release signal for handling autopilot disengagement.

### Summary

Autopilot systems typically engage to steer the marine vessel along a predetermined course or maintain a set heading, using various navigational inputs to adjust the rudder position accordingly. However, situations arise where manual intervention is necessary, and the autopilot must disengage to allow for such input. Common triggers for disengagement include manual helm movement or deviation from the set course or heading beyond a certain limit. Once the need for manual control subsides, re-engaging the autopilot system becomes crucial to return to automated navigation.

Current systems often condition the re-engagement of autopilot functionality on the heading alignment of the marine vessel with the intended course or heading. While such an approach offers a degree of automated navigation resumption, it presents several challenges that can impact navigational efficiency and safety. For instance, reliance on heading can be problematic in conditions where external factors like wind, currents, or steering gear backlash affect the orientation of the marine vessel. These factors can result in a delayed or inappropriate re-engagement of the autopilot, as the system waits for the heading to stabilize within the acceptable range. This delay could lead to extended periods where the vessel is not adhering to the preferred navigational path, potentially increasing travel time and fuel consumption. Moreover, the focus on heading does not account for the dynamic response of the steering mechanism of the marine vessel. The time taken for a vessel to regain its desired heading can vary significantly based on the marine environment and the characteristics of the marine vessel. During this period, the marine vessel might be subject to inefficient routing, increased wear on mechanical components due to frequent adjustments, or even safety risks in high-traffic or obstacle-rich areas. Another aspect often overlooked is the operational complexity introduced by such systems. Crew members including the operator or helmsman must have a clear understanding of when and how the autopilot will re-engage. If the criteria for re-engagement are not intuitive or aligned with the practical handling of the vessel, it can lead to confusion or errors in operation.

While the above the discussion is directed at marine vessel heading as a condition that warrants re-engagement of the autopilot functionality, the prior art suggests other options of conditioning the re-engagement in cases of loss of manual control in severe operating condition, unexpected weather conditions, fuel management, or other precautionary measures. However, there is currently satisfactory way of handling re-engagement of the autopilot functionality.

According to a first aspect of the disclosure there is accordingly provided an autopilot control system for a marine vessel. The autopilot control system comprises processing circuitry configured to: receive a manual autopilot cancel request in response to a rudder of the marine vessel deviating from a boundary value of an autopilot rudder angle, wherein the autopilot rudder angle value pertains to an autopilot mode of the marine vessel; in response to receiving the manual autopilot cancel request, set the autopilot mode to a paused state, the paused state allowing for manual maneuvering of the marine vessel; receive a manual autopilot re-engagement request in response to the rudder being positioned within a boundary value of the autopilot rudder angle value; and in response to receiving the manual autopilot re-engagement request, set the autopilot mode to an active state, the active state causing automatic maneuvering of the marine vessel.

The first aspect of the disclosure may seek to address the need for a more precise and reliable autopilot control system for the re-engagement of autopilot systems in marine vessels, ensuring that the transition from manual to automated navigation is smooth and adheres to navigational parameters. A technical benefit may include enhanced control over autopilot engagement, allowing for a seamless transition back to automated navigation that minimizes the risk of navigational errors and improves response to manual adjustments, thereby improving the adherence to the desired course of the marine vessel with minimal disruption.

Optionally in some examples, including in at least one preferred example, the autopilot rudder angle value corresponds to a neutral position of the rudder being aligned with the longitudinal axis of the marine vessel. A technical advantage may include improved predictability in autopilot response when transitioning from manual to automated control.

Optionally in some examples, including in at least one preferred example, the processing circuitry is configured to register a last known position of the rudder prior to receiving the manual autopilot cancel request, and set the autopilot rudder angle value to said last known position of the rudder. A technical advantage may include the ability to quickly resume automated navigation based on the most recent steered course of the marine vessel, minimizing disruption to the trajectory of the marine vessel.

Optionally in some examples, including in at least one preferred example, the processing circuitry is configured to register a last known autopilot profile of the marine vessel prior to receiving the manual autopilot cancel request, and based on the last known autopilot profile, control the active state of the autopilot mode after receiving the manual autopilot re-engagement request. A technical advantage may include maintaining continuity in the navigational behavior of the marine vessel, providing a seamless transition for the crew and systems onboard.

Optionally in some examples, including in at least one preferred example, the positioning of the rudder within the boundary value of the autopilot rudder angle value is caused by a manual user maneuvering of an input device comprising a steering member connected to the rudder. A technical advantage may include giving the operator direct and intuitive control over the activation and deactivation of the autopilot system, enhancing user experience.

Optionally in some examples, including in at least one preferred example, the processing circuitry is further configured to obtain sensor data from one or more rudder angle transducers arranged on the rudder, and based on the sensor data, set the autopilot mode to the active state. A technical advantage may include precise measurement and adjustment of the rudder angle, ensuring accurate adherence to the predetermined navigational course.

Optionally in some examples, including in at least one preferred example, a boundary value of the autopilot rudder angle value is a tolerance range in relation to the autopilot rudder angle value within which the rudder is to be positioned for setting the autopilot mode to the active state. A technical advantage may include the flexibility to account for dynamic navigational factors while still ensuring effective autopilot engagement.

Optionally in some examples, including in at least one preferred example, the tolerance range is based on one or more of vessel characteristics and environmental factors, the vessel characteristics including one or more of a design of the marine vessel, a travelling speed of the marine vessel, a load of the marine vessel, a load distribution of the marine vessel, and a maneuvering mode of the marine vessel, the environmental factors including one or more of wind speed, wind direction, wave height, wave direction, wave frequency, current speed, and current direction. A technical advantage may include the capability to tailor the responsiveness of the autopilot control system to the specific handling and performance characteristics of the marine vessel, as well as to current environmental conditions.

Optionally in some examples, including in at least one preferred example, the processing circuitry is further configured to receive sensor-retrieved surroundings data from one or more sensor units, and based on the sensor-retrieved surroundings data, dynamically adjust the autopilot rudder angle value and/or set the autopilot mode to the active state. A technical advantage may include enhanced situational awareness, which allows for real-time adjustments to the autopilot settings for improved navigation safety and efficiency.

Optionally in some examples, including in at least one preferred example, the processing circuitry is further configured to receive route data from a route planning system, and based on the route data, dynamically adjust the autopilot rudder angle value and/or set the autopilot mode to the active state. A technical advantage may include the integration of advanced route planning to guide the journey of the marine vessel, improving the route for fuel efficiency, time, or safety, based on rudder angle positions.

Optionally in some examples, including in at least one preferred example, the processing circuitry is further configured to establish one or more waypoints based on the route data, and based on the one or more waypoints, control the automatic maneuvering of the marine vessel during the active state of the autopilot mode. A technical advantage may include automated guidance along complex routes with multiple course changes, leading to more accurate and efficient navigation, based on rudder angle positions.

Optionally in some examples, including in at least one preferred example, the processing circuitry is configured to determine an autopilot re-engagement delay timer, and set the autopilot mode to the active state in response to the rudder being positioned within the boundary value of the autopilot rudder angle value for a time period determined by the autopilot re-engagement delay timer. A technical advantage may include preventing unintended or accidental autopilot engagement, thereby enhancing the safety of vessel operations.

Optionally in some examples, including in at least one preferred example, the processing circuitry is configured to cause generation of sensory feedback to an operator of the marine vessel in response to the rudder being positioned within the boundary value of the autopilot rudder angle value. A technical advantage may include providing the operator with immediate and clear feedback that the autopilot control system is ready to resume control, ensuring smooth operational transitions.

According to a second aspect of the disclosure, there is provided a marine vessel comprising the autopilot control system of the first aspect.

According to a third aspect of the disclosure, there is provided a computer-implemented method for autopilot control of a marine vessel. The method comprises receiving, by processing circuitry of an autopilot control system, a manual autopilot cancel request in response to a rudder of the marine vessel deviating from a boundary value of an autopilot rudder angle value, wherein the autopilot rudder angle value pertains to an autopilot mode of the marine vessel; in response to receiving the manual autopilot cancel request, setting, by the processing circuitry, the autopilot mode to a paused state, the paused state allowing for manual maneuvering of the marine vessel; receiving, by the processing circuitry, a manual autopilot re-engagement request in response to the rudder being positioned within a boundary value of the autopilot rudder angle value; and in response to receiving the manual autopilot re-engagement request, setting, by the processing circuitry, the autopilot mode to an active state, the active state causing automatic maneuvering of the marine vessel.

According to a fourth aspect of the disclosure, there is provided a computer program product comprising program code for performing, when executed by processing circuitry, the computer-implemented method of the third aspect. The fourth aspect of the disclosure may seek to enable new vessel and/or legacy vessel types to be conveniently configured, by software installation/update, to provide autopilot control.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vessel and/or legacy vessel types to be conveniently configured, by software installation/update, to provide autopilot control.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of a marine vessel.
**FIG. 2A** is an exemplary illustration of a marine vessel controlled by an autopilot control system according to examples herein.
**FIG. 2B** is the exemplary marine vessel of **FIG. 2A****,** now having received a manual autopilot cancel request.
**FIG. 2C** is the exemplary marine vessel of **FIG. 2B****,** now having received a manual autopilot re-engagement request.
**FIG. 3** is a flowchart of an exemplary method for navigational control of a marine vessel.
**FIG. 4** is a schematic diagram of an exemplary computer system for implementing examples disclosed herein.

### DETAILED DESCRIPTION

The present disclosure seeks to resolve inefficiencies in marine autopilot systems by introducing an approach that transitions between manual and automated control based on the precise position of the rudder of the marine vessel. This approach allows for a swift and accurate resumption of autopilot once specific rudder angle criteria are met. The approach offers a more controlled and predictable management of the steering process, enhancing safety and reducing the potential for navigational errors during the critical phase where manual and automatic controls intersect. The precision and responsiveness of this approach makes it a significant improvement over existing technologies, particularly in variable sea conditions.

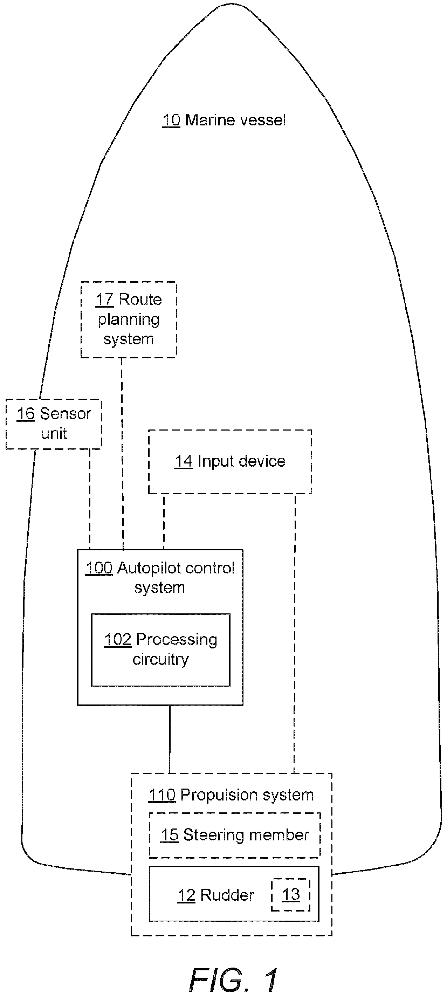

**FIG. 1** **is** an exemplary marine vessel **10** in which inventive concepts of the present disclosure may be applied according to different examples. The marine vessel **10** may be any type of watercraft known in the maritime industry, such as a leisure boat, ship, cruise ship, fishing vessel, yacht, ferry, etc. The dashed boxes may be seen as optional components of the marine vessel **10** applicable in some examples, while the boxes with uniform lines are preferred components.

The marine vessel **10** comprises a rudder **12.** The rudder **12** may be a separate unit or form part of a larger propulsion system **110** having one or more rudders. The rudder **12** is a hydrodynamic surface typically mounted vertically on the stern of the marine vessel **10.** The primary function of the rudder **12** is to control steering by altering the water flow around the hull of the marine vessel **10,** thus changing its course. The rudder **12** is not limited to a particular configuration or type, and may be embodied as a balanced rudder, semi-balanced rudder, spade rudder, fishtail rudder, kicker rudder, or the like.

The rudder **12** may be actuated by rotational movements around its stock or axis, which runs through the rudder **12** and connects it via a steering member **15** to an input device **14** of the marine vessel **12,** such as a joystick, wheel, tiller, helm, or other types of steering mechanisms known in the art. The steering member **15** may be any type of vertical axis that connects a blade of the rudder **12** to the input device **14.** The rudder **12** may further include components typically found in rudders, such as one or more of a rudder blade, a tiller arm, rudder bearings, rudder carrier, or the like.

The rudder **12** may form part of a larger propulsion system **110,** which could include a single propeller and rudder configuration, twin or multiple propellers and rudders, azimuth thruster, pod drives, water jets, or the like.

The rudder **12** may further comprise one or more rudder angle transducers **13.** The rudder angle transducers **13** are responsible for gathering real-time data about the angle and position of the rudder **12.** The rudder angle transducer **13** may be a potentiometric sensor attached to the rudder stock or tiller arm. As the rudder **12** turns, the resistance value changes, which can be translated into an angular position. The rudder angle transducer **13** may be a rotary encoder mountable on the rudder shaft to measure the rotation of the rudder **12** directly, thereby providing angular feedback. The rudder angle transducer **13** may be a hall effect sensor configured to detect changes in the magnetic field as the rudder **12** moves, which correlates to its angular position. The rudder angle transducer **13** may be a linear variable differential transformer (LVDT). Although typically used for linear position sensing, an LVDT can be adapted to measure angular displacement when connected to the rudder **12.** The rudder angle transducer **13** may be a fiber optic gyroscope using the interference of light to detect mechanical rotation and can be used to measure the angular position of the rudder **12.** Other suitable sensors arranged at the rudder **12** may be realized, using one or more sensing techniques singly or in combination.

The marine vessel **10** further comprises an autopilot control system **100** having processing circuitry **102.** The autopilot control system **100** is designed to automate the navigation of the vessel using a series of interconnected components that work in harmony to enhance navigational precision and reliability. The autopilot control system **100** comprises processing circuitry **102,** which serves as the central command unit for receiving input and controlling the other components of the marine vessel **10.** The processing circuitry **102** is programmed to handle various requests and states, such as active and paused states, of an autopilot mode, which dictates a steering behavior of the marine vessel **10.**

The autopilot mode refers to an operational configuration in which the navigational course of the marine vessel **10,** including its direction and optionally speed, is automatically controlled by onboard computer systems, in this case the autopilot control system **100.** The autopilot mode utilizes various input data to calculate and execute necessary steering commands. The autopilot mode is designed to maintain a predetermined path or heading with minimal human intervention, thus reducing the manual workload on the crew and increasing navigational efficiency. The autopilot mode can be set to one or three different states; an inactive state, a paused state and an active state, the paused and the active states being of particular relevance in the present disclosure.

The paused state is an intermediary condition of the autopilot system where automatic steering controls are temporarily halted without fully disengaging the autopilot mode set by the autopilot control system **100.** In this state, the autopilot retains one or more of its current settings, including the target course and speed, but relinquishes control of the rudder **12** to the operator or helmsman for manual maneuvering of the marine vessel **10.** The autopilot control system **100** remains ready to resume active autopilot control upon receiving the appropriate command. In this disclosure, the appropriate control corresponds to a particular position of the rudder **12** in relation to an autopilot rudder angle value, wherein the autopilot rudder angle value pertains to the autopilot mode. The paused state allows for a quick and smooth transition back to automatic navigation once manual intervention is no longer necessary. This will be described in more detail soon.

The active state is the status of the autopilot control system **100** when it is fully engaged, actively controlling the steering of the marine vessel **10** based on navigational parameters, for example being set by the operator or helmsman. During the active state, the processing circuitry **102** may be configured to autonomously adjust the position of the rudder **12** and other navigational controls to correct any deviations from the set course or heading. The processing circuitry **102** may be configured to respond to real-time data from onboard sensors and navigational inputs to maintain the trajectory and optionally speed of the marine vessel **10,** ensuring adherence to an intended navigational plan.

The inactive state refers to the condition where the autopilot mode set by the autopilot control system **100** is completely disengaged and is not influencing the steering or propulsion of the marine vessel **10** in any way. In this state, the autopilot control system **100** does not monitor navigational parameters or issue any control commands. All steering inputs must be manually provided by the operator or helmsman of the marine vessel **10.** The inactive state may be entered intentionally by user input or triggered by an emergency or system failure that necessitates full manual control of the marine vessel **10.**

The marine vessel **10** further comprises one or more sensor units **16.** These sensor units **16** may be optical cameras, infrared cameras, GPS and/or electronic charts, automatic identification systems, radar, lidar, sonar, or the like. Generally, the sensor units **16** are configured to retrieve surroundings data of the environment where the marine vessel **10** is operating. The processing circuitry **102** may receive the sensor-retrieved data, for example via wired or wireless communication, to dynamically adjust the autopilot rudder angle value and/or set the autopilot mode to the active state. Thus, the re-engagement of the autopilot may be based on the surroundings of the marine vessel **100,** and the sensitivity for when the activation of the autopilot mode should occur can vary. For example, more severe weather conditions may warrant a greater acceptance to variations in the autopilot rudder angle, while calmer sea conditions can warrant a greater sensitivity as regards when the autopilot should be activated.

The marine vessel **10** further comprises a route planning system **17.** The processing circuitry **102** may be configured to receive route data from the route planning system **17.** Based on the route data, the processing circuitry **102** may be configured to dynamically adjust the autopilot rudder angle value and/or set the autopilot mode to the active state. The route planning system **17** may be a software application or suite that enables mariners to plan, plot, and manage the course of a voyage before and during the journey. The route planning system **17** may take into account various navigational data points, environmental conditions, and vessel-specific parameters to chart the efficient and safe route(s) from one point to another. The route planning system **17** may for example be an electronic chart display and information system (ECDIS), weather routing software, voyage planning applications, fleet management systems, or the like. The ability for the processing circuitry **102** to receive route data from such systems may allow the autopilot to be aware of the intended course of the marine vessel **10.** Upon receiving this data, the processing circuitry **102** can dynamically adjust the autopilot rudder angle value, ensuring that the position of the rudder **12** is adapted for the current segment of the planned route. Additionally or alternatively, it can use this information to transition the autopilot mode from paused to active, effectively taking over navigation per the planned route. This dynamic adjustment may be beneficial in long voyages where conditions may change or when deviating from the original route becomes necessary due to unexpected obstacles or changes in environmental conditions.

In some examples, the processing circuitry **102** is configured to establish one or more waypoints based on the route data and control the automatic maneuvering of the marine vessel based thereon. Utilizing these waypoints, the processing circuitry **102** may direct the marine vessel **10** during the active state of the autopilot mode, ensuring the vessel navigates through each waypoint effectively and handles the rudder **12** positions and control of autopilot mode in accordance therewith.

A typical navigational scenario will now be explained in detail. In this scenario the marine vessel **10** is cruising under the control of the active autopilot mode. This includes that the autopilot control system **100** autonomously steers the marine vessel **10** by way of the autopilot mode, thereby maintaining its set course and heading. The operator or helmsman of the marine vessel **10** oversees the progress of the marine vessel **10,** relying on the autopilot for steady navigation. However, certain situations may arise that necessitate manual control, such as approaching a congested shipping lane requiring intricate maneuvering, encountering unexpected obstacles (like floating debris or small uncharted islands), reacting to sudden and severe changes in weather conditions, performing complex docking procedures in a marina, and other such situations.

When the operator decides to take manual control, this decision corresponds to the processing circuitry **102** receiving a manual autopilot cancel request. The manual autopilot cancel request may be sent from a communicating unit of the rudder **12** to the processing circuitry **102,** for example using any wired or wireless interface known in the art (e.g. Ethernet, CAN, Bluetooth, WiFi). The communicating unit may for example be one of the sensors as discussed above, or a separate module capable of communicating with the autopilot control system **100.** The manual autopilot cancel request is a request for cancellation of the active state of the autopilot mode, and is accordingly typically initiated by the operator or helmsman due to a need for manual navigation or an unexpected change in the environment of the marine vessel **10.** The manual autopilot cancel request thus acts as a trigger for the transition from the active state to the paused state. The processing circuitry **102** is configured to respond to this by setting the autopilot mode to the paused state. As discussed above, this state suspends the automatic steering functions of the autopilot, allowing the helmsman to maneuver the vessel as needed without interference from the autopilot system. The paused state, as opposed to the inactive state, retains the autopilot settings and navigational objectives, enabling a seamless eventual transition back to autopilot control after some arbitrary time period. It is thus important that the autopilot mode is not deactivated but instead paused to facilitate for re-entering into the autopilot mode once the need for manual maneuvering subsides.

Receiving the manual autopilot cancel request is conditioned by the rudder **12** deviating from a boundary value of an autopilot rudder angle value of the autopilot mode. This boundary value should be interpreted as a first boundary value, and is not necessarily the same as the second boundary value which will be described later on when discussing the transition back from the paused state to the active state. The boundary value may be zero, i.e., a deviation from the autopilot rudder angle value causes the request to be generated. The boundary value may in other examples be a predefined tolerance range around an autopilot rudder angle value, for example defining a range of acceptable angles above and/or below the autopilot rudder angle value which the rudder **12** is to be positioned at which the autopilot can effectively maintain the course of the marine vessel **10.** Purely by way of example, the tolerance range may be ±α degrees in any direction from the autopilot rudder angle value, where α may be 1 degree, 2 degrees, 3 degrees, 4 degrees, 5 or more degrees, or practically and suitable value suitable for prevailing operating conditions (including decimal values, e.g. 0.01, 0.10, 0.50, 1.00, 1.50, 2.50, 3.75, or the like).

The tolerance range may be based on one or more of vessel characteristics and environmental factors. These characteristics and factors may directly influence how the marine vessel **10** and associated autopilot functionalities respond to rudder adjustments. The vessel characteristics may include a design of the marine vessel **10** (e.g. size, dimensions, and other structural features), the speed at which the marine vessel **10** is traveling, the load of the marine vessel **10** and how it is distributed, the maneuvering mode (e.g. whether the marine vessel **10** is in a docking mode, cruising mode, fishing mode, or other modes). Environmental factors may include wind conditions such as speed or direction, wave conditions such as height and frequency, and current conditions (i.e. sea currents), such as speed and direction. By considering these diverse and dynamic parameters, the processing circuitry **102** can dynamically adjust the tolerance range to ensure the autopilot system remains effective and reliable under varying conditions. This may allow for the fine-tuning of the response of the autopilot functionality to the position of the rudder **12.** With a tolerance range that accounts for such a broad spectrum of influencing factors, the autopilot control system **100** may be better equipped to handle the complexities of marine navigation, which may lead to enhanced operational performance and navigational safety.

When the angle of the rudder **12** remains within this boundary, the autopilot system assumes control, optionally making minor adjustments as needed to keep the marine vessel **10** on its programmed path. However, when an event occurs that requires the rudder **12** to deviate beyond this boundary value, such as an evasive maneuver to avoid collision, an intentional course correction by the helmsman, or a response to sudden environmental changes, the processing circuitry **102** recognizes this as a manual intervention. The deviation from the boundary value thus signifies that the angle of the rudder **12** angle has moved outside the limits where the autopilot can autonomously correct the heading of the vessel **10.**

The significance of conditioning the cancel request on the deviation of the angle of the rudder **12** from the autopilot rudder angle value is at least twofold. Firstly, it ensures that the autopilot relinquishes control only when necessary, avoiding unnecessary transitions that could disrupt the stability of the marine vessel **10.** Secondly, it gives the operator or helmsman the authority to override the autopilot when significant manual input is required, without having to navigate through complex control systems or override protocols.

In response to receiving the cancel request, the processing circuitry **102** is configured to set the autopilot mode to the paused state, thereby allowing for manual maneuvering of the marine vessel **10.** The manual autopilot cancel request thus acts as a safeguard that enables an orderly and controlled handover from autopilot to manual control, triggered by the precise condition of the angle of the rudder **12** exceeding the set boundary value. This condition-based approach ensures that the transition between control states is both intentional and responsive to immediate navigational needs of the marine vessel **10.**

In some examples, the processing circuitry **102** is configured to register a last known position of the rudder **12** prior to receiving the manual autopilot cancel request. The autopilot rudder angle value can be set to this last known position of the rudder **12.** This may be a continuous monitoring and registering of a rudder position which updates as a function of time. This allows the processing circuitry **102** to capture the exact rudder angle at the moment just before the autopilot mode is set to a paused state. By having a record of the position of the rudder **12,** a seamless transition from autopilot to manual control can be provided which may minimize any abrupt changes in steering that could occur if the autopilot were to disengage without such a reference point. This may be done by the processing circuitry **102** storing in an associated memory unit, and freeze the current reading as the last known position upon receiving the manual autopilot cancel request.

**In** some examples, the processing circuitry **102** is configured to register a last known autopilot profile of the marine vessel **10** prior to receiving the manual autopilot cancel request. This may be recorded similar to the last known position of the rudder **12** according to the above examples. The autopilot profile may be used for controlling the active state of the autopilot. To this end, these examples makes it possible to resume the autopilot operation from a previously used autopilot profile.

After the need for manual control subsides, perhaps after navigating the congested area, avoiding the obstacle, or correcting the course post-weather change, the operator may wish to re-engage the autopilot mode to continue the journey with automated assistance. In the present disclosure, this re-engagement is facilitated by the operator intuitively controlling the rudder **12** back to the autopilot rudder angle value. The autopilot rudder angle value may thus correspond to a neutral or standard cruising position of the rudder **12** that aligns with the longitudinal axis of the marine vessel **10.** Typically, this will be the desired course of the marine vessel **10.**

Much like the transition from the active mode to the paused mode, the transition back from the paused mode to the active mode involves, by the processing circuitry **102,** receiving a request. This request is a manual autopilot re-engagement request, and it is received in response to the rudder **12** being positioned within a boundary value of the autopilot rudder angle value. As discussed above, this may be seen as a second boundary value, and is not necessarily the same boundary value as the first boundary value, although it can be. It may also be seen as a tolerance range in relation to the autopilot rudder angle, similar to what was described above. Hence, the receiving of the manual autopilot re-engagement request is conditioned by the rudder **12** being positioned within said boundary value of the autopilot rudder angle value.

In response to receiving the manual autopilot re-engagement request, the processing circuitry **102** is further configured to set the autopilot mode to the active state, thus causing automatic maneuvering of the marine vessel **10.** The manual autopilot re-engagement request is designed to facilitate a smooth and controlled transition back from manual to automated navigation. This request is predicated on the angle of the rudder **12** being aligned within a specified boundary limit of the autopilot rudder angle value. The request can be received using similar approaches as was discussed above, e.g. through wired or wireless communication between a communicating unit of the rudder **12** and the processing circuitry **102.**

When the helmsman or operator adjusts the rudder manually and aligns it within this boundary limit, the processing circuitry **102** recognizes the manual input as a request to re-engage the autopilot. The processing circuitry **102** can detect this alignment through feedback from rudder angle transducers or other onboard sensors that continuously monitor the position of the rudder **12.**

In some examples, the processing circuitry **102** is configured to determine an autopilot re-engagement delay timer, and set the autopilot mode to the active state in response to the rudder **12** being positioned within the boundary value of the autopilot rudder angle value for a time period determined by the autopilot re-engagement delay timer. The delay timer may vary depending on circumstances such as weather conditions, operating modes, vessel characteristics, or the like. For example, the delay timer may be 1 second, 2 seconds, or 3 or more seconds, or any value therebetween. This may serve as a strategic feature designed to prevent accidental or premature re-engagement of the autopilot mode. The timer sets a defined waiting period during which the rudder **12** must consistently remain within the boundary value of the autopilot rudder angle value before the autopilot mode can transition back to the active state. By requiring the rudder **12** to maintain its position for the duration of this timer, the system ensures intentional and stable conditions are met, thereby safeguarding against inadvertent activation of the autopilot, which could disrupt manual navigation or lead to unintended course changes.

In some examples, the re-engagement may be complemented by sensor feedback generation to an operator or helmsman of the marine vessel **10** in response to the rudder **12** being positioned within the boundary value of the autopilot rudder angle value. When the rudder **12** aligns within the designated boundary value of the autopilot rudder angle, the processing circuitry **102** is configured to actively signal the operator. This immediate feedback confirms that the rudder **12** is correctly positioned for autopilot re-engagement, providing the operator with a clear cue to proceed with transitioning the autopilot mode back to the active state. This feature may aid in minimizing operator error and ensures a smooth handover from manual to automated control. The sensory feedback may be provided through control of a force feedback unit incorporated within the input device **14,** through control of a visual indicator such as a display screen or LED light, through control of a speaker device such as via an alarm signal, or the like.

The re-engagement approach detailed herein is advantageous over relying on other methods of re-engagement for several reasons, such as the current heading of the vessel. Firstly, the angle of the rudder **12** provides a direct measure of steering input, allowing the autopilot to resume control based on precise rudder positioning rather than more variable conditions such as heading, which can be influenced by external factors such as currents and wind. Secondly, by returning the rudder **12** to a known angle value, the operator or helmsman has a clear and tangible point of reference for when the autopilot will take over, enhancing the predictability of the behavior of the autopilot control system **100.** Thirdly, setting the autopilot mode to resume based on the angle of the rudder **12** allows for a quicker re-engagement than waiting for the marine vessel **10** to e.g. stabilize at a certain heading, which can be especially slow after abrupt or significant manual maneuvers. Fourthly, the rudder angle-based approach ensures that the autopilot only re-engages when the steering mechanism, such as the input device **14,** is correctly aligned with the desired course, thereby reducing the risk of unintended movements or course deviations at the critical moment of transition. These and other advantages can be considered in combination or singly, and it is appreciated that the skilled person realizes one or more additional benefits. Intuitively, it is more straightforward for the helmsman to align the rudder **12** to a specific angle than to e.g. achieve a specific heading, especially in challenging conditions. The rudder angle is a direct input, whereas e.g. the heading is an outcome influenced by various dynamic factors. By focusing on the rudder angle, the present disclosure ensures that the autopilot control system **100** of the marine vessel **10** can resume its navigational tasks in an efficient, safe, and operator-friendly manner.

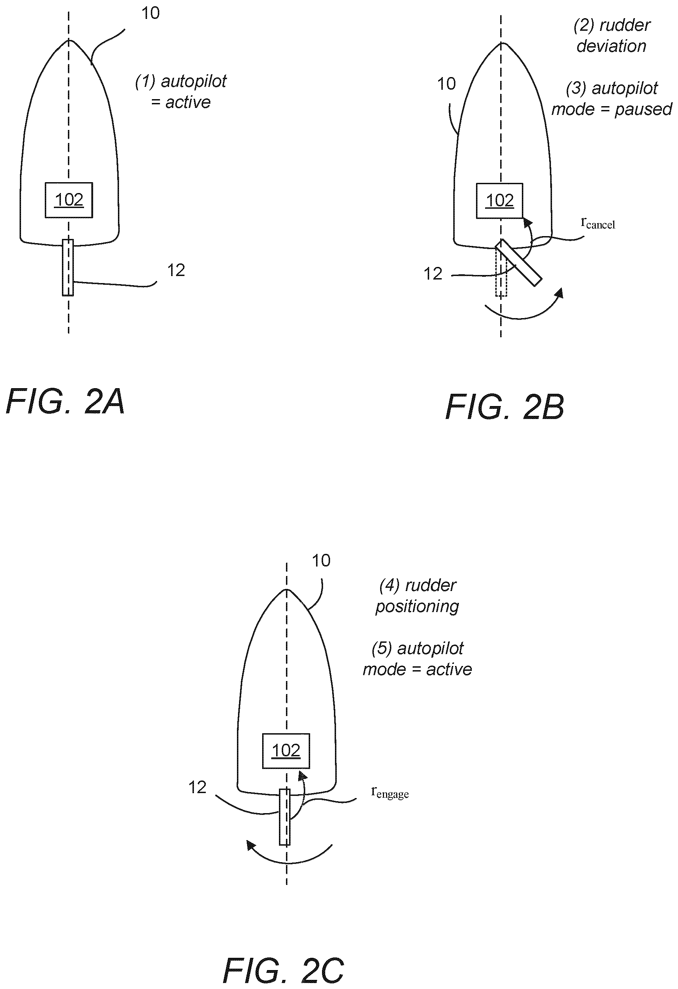

With further reference to **FIGs. 2A-C,** autopilot control of a marine vessel **10** is visualized according to some general examples as has been taught herein. Overall, the autopilot control behaviour aims to enable seamless transitions between manual and automatic control, ensuring precise navigation by allowing the operator to intuitively initiate or cancel autopilot engagement based on the position of the rudder **12.**

In **FIG. 2A****,** the marine vessel **10** is illustrated where the autopilot mode is in the active state, i.e., where the processing circuitry **102** is actively controlling the navigation of the marine vessel **10** via the rudder **12.**

In **FIG. 2B****,** the marine vessel **10** has transitioned to manual control following a manual autopilot cancel request **r_{cancel}**. This request was activated because the rudder **12** moved beyond the designated boundaries surrounding the autopilot rudder angle value, indicating the intention of the operator or helmsman to take over steering duties. The processing circuitry **102** has acknowledged this change and has set the autopilot mode to a paused state, thereby allowing for full manual maneuverability of the marine vessel **10** by the operator.

In **FIG. 2C****,** the operator decides to return control to the autopilot function. By manually steering the rudder **12** back within the boundaries of the autopilot rudder angle value, the operator signals this intent to the processing circuitry **102** which receives a manual autopilot re-engagement request **r_{engage}.** The processing circuitry **102** recognizes the position of the rudder **12** as being within the established acceptable range and reactivates the active state of the autopilot mode. The marine vessel 10 can now continue operating under automatic control as depicted previously in **FIG. 1A,** with the autopilot system resuming its role in steering the vessel according to the established route or heading.

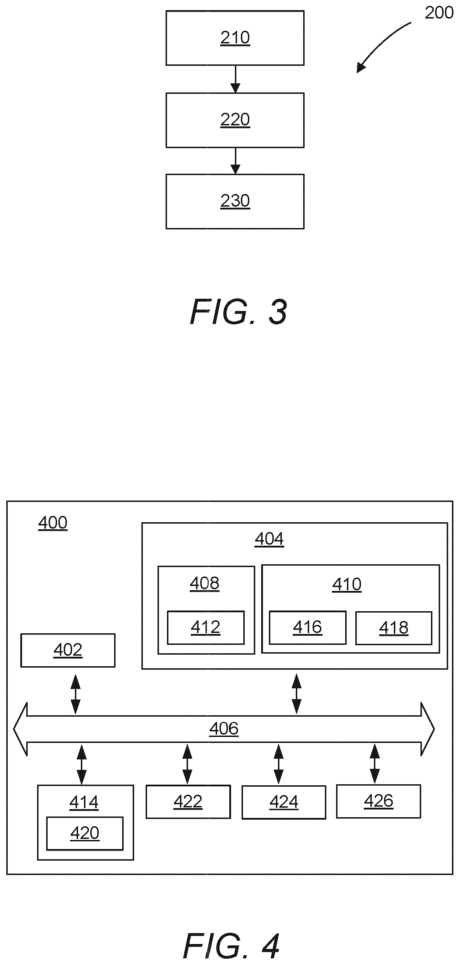

**FIG. 3** is a flowchart of a method **200** for autopilot control of a marine vessel **10.** The method **200** is performed by processing circuitry **102** of an autopilot control system **100.** The method **200** comprises receiving **210** a manual autopilot cancel request in response to a rudder **12** of the marine vessel **10** deviating from a boundary value of an autopilot rudder angle value, wherein the autopilot rudder angle value pertains to an autopilot mode of the marine vessel **10.** The method **200** further comprises, in response to receiving the manual autopilot cancel request, setting **220** the autopilot mode to a paused state, the paused state allowing for manual maneuvering of the marine vessel **10.** The method **200** further comprises receiving **230** a manual autopilot re-engagement request in response to the rudder **12** being positioned within a boundary value of the autopilot rudder angle value. The method **200** further comprises, in response to receiving the manual re-engagement request, setting **240** the autopilot mode to an active state, the active state causing automatic maneuvering of the marine vessel **10.**

**FIG. 4** is a schematic diagram of a computer system **400** for implementing examples disclosed herein. The autopilot control system **100** as discussed herein may in some examples be the computer system **400.** The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device
interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

## Claims

1. An autopilot control system (100; 400) for a marine vessel (10), the autopilot control system (100; 400) comprising processing circuitry (102; 402) configured to:
receive a manual autopilot cancel request (r_{cancel}) in response to a rudder (12) of the marine vessel (10) deviating from a boundary value of an autopilot rudder angle value, wherein the autopilot rudder angle value pertains to an autopilot mode of the marine vessel (10);
in response to receiving the manual autopilot cancel request (r_{cancel}), set the autopilot mode to a paused state, the paused state allowing for manual maneuvering of the marine vessel (10);
**characterized in that** the processing circuitry is further configured to:
receive a manual autopilot re-engagement request (r_{engage}) in response to the rudder (12) being positioned within a boundary value of the autopilot rudder angle value; and
in response to receiving the manual autopilot re-engagement request (r_{engage}), set the autopilot mode to an active state, the active state causing automatic maneuvering of the marine vessel (10).

2. The autopilot control system (100; 400) of claim 1, wherein the autopilot rudder angle value corresponds to a neutral position of the rudder (12) being aligned with the longitudinal axis of the marine vessel (10).

3. The autopilot control system (100; 400) of any preceding claim, wherein the processing circuitry (102; 402) is configured to:
register a last known position of the rudder (12) prior to receiving the manual autopilot cancel request (r_{cancel}), and
set the autopilot rudder angle value to said last known position of the rudder (12).

4. The autopilot control system (100; 400) of any preceding claim, wherein the processing circuitry (102; 402) is configured to:
register a last known autopilot profile of the marine vessel (10) prior to receiving the manual autopilot cancel request (r_{cancel}), the autopilot profile comprising course-keeping or track-following operations comprising a speed and a direction of the marine vessel (10), and
based on the last known autopilot profile, control the active state of the autopilot mode after receiving the manual autopilot re-engagement request (r_{engage}).

5. The autopilot control system (100; 400) of any preceding claim, wherein the positioning of the rudder (12) within the boundary value of the autopilot rudder angle value is caused by a manual user maneuvering of an input device (14) comprising a steering member (15) connected to the rudder (12).

6. The autopilot control system (100; 400) of any preceding claim, wherein the processing circuitry (102; 402) is further configured to:
recognize the rudder (12) as being positioned within the boundary value of the autopilot rudder angle value based on sensor data obtained from one or more rudder angle transducers arranged on the rudder (12).

7. The autopilot control system (100; 400) of any preceding claim, wherein a boundary value of the autopilot rudder angle value is a tolerance range in relation to the autopilot rudder angle value within which the rudder (12) is to be positioned for setting the autopilot mode to the active state.

8. The autopilot control system (100; 400) of claim 7, wherein the tolerance range is based on one or more of vessel characteristics and environmental factors,
the vessel characteristics including one or more of a design of the marine vessel (10), a travelling speed of the marine vessel (10), a load of the marine vessel (10), a load distribution of the marine vessel (10), and a maneuvering mode of the marine vessel (10),
the environmental factors including one or more of wind speed, wind direction, wave height, wave direction, wave frequency, current speed, and current direction.

9. The autopilot control system (100; 400) of any preceding claim, wherein the processing circuitry (102; 402) is further configured to:
receive sensor-retrieved surroundings data from one or more sensor units (16), and
based on the sensor-retrieved surroundings data, dynamically adjust the autopilot rudder angle value and/or set the autopilot mode to the active state.

10. The autopilot control system (100; 400) of any preceding claim, wherein the processing circuitry (102; 402) is further configured to:
receive route data from route planning system (17), and
based on the route data, dynamically adjust the autopilot rudder angle value and/or set the autopilot mode to the active state.

11. The autopilot control system (100; 400) of claim 10, wherein the processing circuitry (102; 402) is further configured to:
establish one or more waypoints based on the route data, and
based on the one or more waypoints, control the automatic maneuvering of the marine vessel (10) during the active state of the autopilot mode.

12. The autopilot control system (100; 400) any preceding claim, wherein the processing circuitry (102; 402) is configured to:
determine an autopilot re-engagement delay timer, and
set the autopilot mode to the active state in response to the rudder (12) being positioned within the boundary value of the autopilot rudder angle value for a time period determined by the autopilot re-engagement delay timer.

13. The autopilot control system (100; 400) of any preceding claim, wherein the processing circuitry (102; 402) is configured to cause generation of sensory feedback to an operator of the marine vessel (10) in response to the rudder (12) being positioned within the boundary value of the autopilot rudder angle value.

14. A marine vessel (10) comprising the autopilot control system (100; 400) of any of claims 1-13.

15. A computer-implemented method (200) for autopilot control of a marine vessel (10), the method (200) comprising:
receiving (210), by processing circuitry (102; 402) of an autopilot control system (100; 400), a manual autopilot cancel request (r_{cancel}) in response to a rudder (12) of the marine vessel (10) deviating from a boundary value of an autopilot rudder angle value, wherein the autopilot rudder angle value pertains to an autopilot mode of the marine vessel (10);
in response to receiving the manual autopilot cancel request (r_{cancel}), setting (220), by the processing circuitry (102; 402), the autopilot mode to a paused state, the paused state allowing for manual maneuvering of the marine vessel (10);
**characterized in that** the method is further comprising:
receiving (230), by the processing circuitry (102; 402), a manual autopilot re-engagement request (r_{engage}) in response to the rudder (12) being positioned within a boundary value of the autopilot rudder angle value; and
in response to receiving the manual autopilot re-engagement request (r_{engage}), setting (240), by the processing circuitry (102; 402), the autopilot mode to an active state, the active state causing automatic maneuvering of the marine vessel (10).

## Patentansprüche

1. Autopilot-Steuersystem (100; 400) für ein Wasserfahrzeug (10), das Autopilot-Steuersystem (100; 400) umfassend eine Verarbeitungsschaltung (102; 402), die zu Folgendem konfiguriert ist:
Empfangen einer manuellen Autopilot-Abbruchanforderung (r_{cancel}) als Reaktion darauf, dass ein Ruder (12) des Wasserfahrzeugs (10) von einem Grenzwert eines Autopilot-Ruderwinkelwerts abweicht, wobei der Autopilot-Ruderwinkelwert zu einem Autopilot-Modus des Wasserfahrzeugs (10) gehört;
als Reaktion auf ein Empfangen der manuellen Autopilot-Abbruchanforderung (r_{cancel}), Versetzen des Autopilotmodus in einen Pausenzustand, wobei der Pausenzustand ein manuelles Manövrieren des Wasserfahrzeugs (10) ermöglicht;
**dadurch gekennzeichnet, dass** die Verarbeitungsschaltung ferner zu Folgendem konfiguriert ist:
Empfangen einer manuellen Autopilot-Wiedereinschaltanforderung (r_{engage}) als Reaktion darauf, dass das Ruder (12) innerhalb eines Grenzwerts des Autopilot-Ruderwinkelwerts positioniert ist; und
als Reaktion auf ein Empfangen der manuellen Autopilot-Wiedereinschaltanforderung (r_{engage}), Versetzen des Autopilotmodus in einen aktiven Zustand, wobei der aktive Zustand ein automatisches Manövrieren des Wasserfahrzeugs (10) bewirkt.

2. Autopilot-Steuersystem (100; 400) nach Anspruch 1, wobei der Autopilot-Ruderwinkelwert einer neutralen Position des Ruders (12) entspricht, die mit der Längsachse des Wasserfahrzeugs (10) ausgerichtet ist.

3. Autopilot-Steuersystem (100; 400) nach einem der vorherigen Ansprüche, wobei die Verarbeitungsschaltung (102; 402) zu Folgendem konfiguriert ist:
Registrieren einer letzten bekannten Position des Ruders (12) vor Empfangen der manuellen Autopilot-Abbruchanforderung (r_{cancel}), und
Setzen des Werts für den Ruderwinkel des Autopiloten auf die letzte bekannte Position des Ruders (12).

4. Autopilot-Steuersystem (100; 400) nach einem der vorherigen Ansprüche, wobei die Verarbeitungsschaltung (102; 402) zu Folgendem konfiguriert ist:
Registrieren eines letzten bekannten Autopilot-Profils des Wasserfahrzeugs (10) vor Empfangen der manuellen Autopilot-Abbruchanforderung (r_{cancel}), wobei das Autopilot-Profil Kurshalte- oder Spurverfolgungsoperationen umfasst, die eine Geschwindigkeit und eine Richtung des Wasserfahrzeugs (10) umfassen, und
basierend auf dem letzten bekannten Autopilot-Profil, Steuern des aktiven Zustands des Autopilotmodus nach Empfangen der manuellen Autopilot-Wiedereinschaltanforderung (r_{engage}).

5. Autopilot-Steuersystem (100; 400) nach einem der vorherigen Ansprüche, wobei das Positionieren des Ruders (12) innerhalb des Grenzwerts des Autopilot-Ruderwinkelwerts durch ein manuelles Benutzermanöver eines Eingabegeräts (14) bewirkt wird, wobei das Eingabegerät ein mit dem Ruder (12) verbundenes Steuerelement (15) umfasst.

6. Autopilot-Steuersystem (100; 400) nach einem der vorherigen Ansprüche, wobei die Verarbeitungsschaltung (102; 402) ferner zu Folgendem konfiguriert ist:
Erkennen des Ruders (12) als innerhalb des Grenzwerts des Autopilot-Ruderwinkelwerts positioniert, basierend auf Sensordaten, die von einem oder mehreren an dem Ruder (12) angeordneten Ruderwinkelgebern erhalten werden.

7. Autopilot-Steuersystem (100; 400) nach einem der vorherigen Ansprüche, wobei ein Grenzwert des Autopilot-Ruderwinkelwerts ein Toleranzbereich in Bezug auf den Autopilot-Ruderwinkelwert ist, innerhalb dessen das Ruder (12) zu positionieren ist, um den Autopilot-Modus in den aktiven Zustand zu versetzen.

8. Autopilot-Steuersystem (100; 400) nach Anspruch 7, wobei der Toleranzbereich auf einer oder mehreren Schiffseigenschaften und Umweltfaktoren basiert,
wobei die Schiffseigenschaften eines oder mehrere von einer Konstruktion des Wasserfahrzeugs (10), eine Fahrgeschwindigkeit des Wasserfahrzeugs (10), eine Last des Wasserfahrzeugs (10), eine Lastverteilung des Wasserfahrzeugs (10) und einen Manövriermodus des Wasserfahrzeugs (10) umfassen, wobei die Umgebungsfaktoren eine oder mehrere von Windgeschwindigkeit, Windrichtung, Wellenhöhe, Wellenrichtung, Wellenfrequenz, Stromgeschwindigkeit und Stromrichtung umfassen.

9. Autopilot-Steuersystem (100; 400) nach einem der vorherigen Ansprüche, wobei die Verarbeitungsschaltung (102; 402) ferner zu Folgendem konfiguriert ist:
Empfangen von Umgebungsdaten, die von einer oder mehreren Sensoreinheiten (16) sensorisch ermittelt werden, und basierend auf den sensorisch ermittelten Umgebungsdaten, dynamisches Anpassen des Autopilot-Ruderwinkelwerts und/oder Versetzen des Autopilotmodus in den aktiven Zustand.

10. Autopilot-Steuersystem (100; 400) nach einem der vorherigen Ansprüche, wobei die Verarbeitungsschaltung (102; 402) ferner zu Folgendem konfiguriert ist:
Empfangen von Streckendaten von einem Streckenplanungssystem (17), und
basierend auf den Streckendaten, dynamisches Anpassen des Autopilot-Ruderwinkelwerts und/oder Versetzen des Autopilotmodus in den aktiven Zustand.

11. Autopilot-Steuersystem (100; 400) nach Anspruch 10, wobei die Verarbeitungsschaltung (102; 402) ferner zu Folgendem konfiguriert ist:
Festlegen eines oder mehrerer Wegpunkte basierend auf den Streckendaten, und
basierend auf dem einen oder den mehreren Wegpunkten, automatisches Manövrieren des Wasserfahrzeugs (10) während des aktiven Zustands des Autopilotmodus.

12. Autopilot-Steuersystem (100; 400) nach einem der vorherigen Ansprüche, wobei die Verarbeitungsschaltung (102; 402) zu Folgendem konfiguriert ist:
Bestimmen einer Autopilot-Wiedereinschalt-Verzögerungszeit, und
Versetzen des Autopilotmodus in den aktiven Zustand als Reaktion darauf, dass das Ruder (12) innerhalb des Grenzwerts des Autopilot-Ruderwinkelwerts für eine durch die Autopilot-Wiedereinschalt-Verzögerungszeit bestimmte Zeitspanne positioniert ist.

13. Autopilot-Steuersystem (100; 400) nach einem der vorherigen Ansprüche, wobei die Verarbeitungsschaltung (102; 402) konfiguriert ist, um die Erzeugung einer sensorischen Rückmeldung an einen Bediener des Wasserfahrzeugs (10) in Reaktion darauf zu veranlassen, dass das Ruder (12) innerhalb des Grenzwerts des Autopilot-Ruderwinkelwerts positioniert ist.

14. Wasserfahrzeug (10), umfassend das Autopilot-Steuersystem (100; 400) nach einem der Ansprüche 1-13.

15. Computerimplementiertes Verfahren (200) zur Autopilot-Steuerung eines Wasserfahrzeugs (10), das Verfahren (200) umfassend:
Empfangen (210), durch eine Verarbeitungsschaltung (102; 402) eines Autopilot-Steuersystems (100; 400), einer manuellen Autopilot-Abbruchanforderung (r_{cancel}) als Reaktion darauf, dass ein Ruder (12) des Wasserfahrzeugs (10) von einem Grenzwert eines Autopilot-Ruderwinkelwerts abweicht, wobei der Autopilot-Ruderwinkelwert zu einem Autopilot-Modus des Wasserfahrzeugs (10) gehört;
als Reaktion auf ein Empfangen der manuellen Autopilot-Abbruchanforderung (r_{cancel}), Versetzen (220) des Autopilotmodus in einen Pausenzustand durch die Verarbeitungsschaltung (102; 402), wobei der Pausenzustand ein manuelles Manövrieren des Wasserfahrzeugs (10) ermöglicht;
**dadurch gekennzeichnet, dass** das Verfahren ferner Folgendes umfasst:
Empfangen (230), durch die Verarbeitungsschaltung (102; 402), einer manuellen Autopilot-Wiedereinschaltanforderung (r_{engage}) als Reaktion darauf, dass das Ruder (12) innerhalb eines Grenzwerts des Autopilot-Ruderwinkelwerts positioniert ist; und
als Reaktion auf ein Empfangen der manuellen Autopilot-Wiedereinschaltanforderung (r_{engage}), Versetzen (240), durch die Verarbeitungsschaltung (102; 402), des Autopilotmodus in einen aktiven Zustand, wobei der aktive Zustand ein automatisches Manövrieren des Wasserfahrzeugs (10) bewirkt.

## Revendications

1. Système de commande de pilotage automatique (100 ; 400) pour un navire (10), le système de commande de pilotage automatique (100 ; 400) comprenant des circuits de traitement (102 ; 402) configurés pour :
recevoir une demande d'annulation manuelle du pilotage automatique (r_{cancel}) en réponse à un écart du gouvernail (12) du navire (10) par rapport à une valeur limite d'une valeur d'angle de gouvernail de pilotage automatique, dans lequel la valeur d'angle de gouvernail de pilotage automatique se rapporte à un mode de pilotage automatique du navire (10) ;
en réponse à la réception de la demande d'annulation manuelle du pilotage automatique (r_{cancel}), mettre le mode de pilotage automatique en état de pause, l'état de pause permettant la manœuvre manuelle du navire (10) ;
**caractérisé en ce que** les circuits de traitement sont en outre configurés pour :
recevoir une demande de réengagement manuelle du pilotage automatique (r_{engage}) en réponse au positionnement du gouvernail (12) à l'intérieur d'une valeur limite de la valeur d'angle de gouvernail de pilotage automatique ; et
en réponse à la réception de la demande de réengagement manuelle de pilotage automatique (r_{engage}), mettre le mode de pilotage automatique dans un état actif, l'état actif entraînant la manœuvre automatique du navire (10).

2. Système de commande de pilotage automatique (100 ; 400) selon la revendication 1, dans lequel la valeur d'angle de gouvernail de pilotage automatique correspond à une position neutre du gouvernail (12) étant alignée avec l'axe longitudinal du navire (10).

3. Système de commande de pilotage automatique (100 ; 400) selon l'une quelconque des revendications précédentes, dans lequel les circuits de traitement (102 ; 402) sont configurés pour :
enregistrer une dernière position connue du gouvernail (12) avant la réception de la demande d'annulation manuelle de pilotage automatique (r_{cancel}), et
régler la valeur d'angle de gouvernail de pilotage automatique sur la dernière position connue du gouvernail (12).

4. Système de commande de pilotage automatique (100 ; 400) selon l'une quelconque des revendications précédentes, dans lequel les circuits de traitement (102 ; 402) sont configurés pour :
enregistrer un dernier profil de pilotage automatique connu du navire (10) avant la réception de la demande d'annulation manuelle de pilotage automatique (r_{cancel}), le profil de pilotage automatique comprenant des opérations de maintien de cap ou de suivi de sillage comprenant une vitesse et une direction du navire (10), et
sur la base du dernier profil de pilotage automatique connu, contrôler l'état actif du mode de pilotage automatique après la réception de la demande de réengagement manuelle de pilotage automatique (r_{engage}).

5. Système de commande de pilotage automatique (100 ; 400) selon l'une quelconque des revendications précédentes, dans lequel le positionnement du gouvernail (12) dans la valeur limite de la valeur d'angle de gouvernail du pilotage automatique est provoqué par une manœuvre manuelle de l'utilisateur d'un dispositif d'entrée (14) comprenant un organe de direction (15) relié au gouvernail (12).

6. Système de commande de pilotage automatique (100 ; 400) selon l'une quelconque des revendications précédentes, dans lequel les circuits de traitement (102 ; 402) sont en outre configurés pour :
reconnaître le gouvernail (12) comme étant positionné dans la valeur limite de la valeur d'angle de gouvernail de pilotage automatique sur la base des données de capteur obtenues à partir d'un ou de plusieurs transducteurs d'angle de gouvernail agencés sur le gouvernail (12).

7. Système de commande de pilotage automatique (100 ; 400) selon l'une quelconque des revendications précédentes, dans lequel une valeur limite de la valeur de l'angle de gouvernail de pilotage automatique est une plage de tolérance par rapport à la valeur d'angle de gouvernail de pilotage automatique dans laquelle le gouvernail (12) doit être positionné pour mettre le mode de pilotage automatique à l'état actif.

8. Système de commande de pilotage automatique (100 ; 400) selon la revendication 7, dans lequel la plage de tolérance est fondée sur un ou plusieurs éléments parmi les caractéristiques du navire et les facteurs environnementaux,
les caractéristiques du navire comprenant une ou plusieurs caractéristiques parmi une conception du navire (10), une vitesse de déplacement du navire (10), une charge du navire (10), une répartition de la charge du navire (10) et un mode de manœuvre du navire (10), les facteurs environnementaux comprenant un ou plusieurs facteurs parmi la vitesse du vent, la direction du vent, la hauteur des vagues, la direction des vagues, la fréquence des vagues, la vitesse du courant et la direction du courant.

9. Système de commande de pilotage automatique (100 ; 400) selon l'une quelconque des revendications précédentes, dans lequel les circuits de traitement (102 ; 402) sont en outre configurés pour :
recevoir d'une ou plusieurs unités de capteur (16) des données sur l'environnement récupérées par les capteurs et, sur la base des données sur l'environnement récupérées par les capteurs, ajuster dynamiquement la valeur d'angle de gouvernail de pilotage automatique et/ou mettre le mode de pilotage automatique à l'état actif.

10. Système de commande de pilotage automatique (100 ; 400) selon l'une quelconque des revendications précédentes, dans lequel les circuits de traitement (102 ; 402) sont en outre configurés pour :
recevoir des données d'itinéraire du système de planification d'itinéraire (17), et
en fonction des données d'itinéraire, ajuster dynamiquement la valeur d'angle de gouvernail de pilotage automatique et/ou mettre le mode de pilotage automatique à l'état actif.

11. Système de commande de pilotage automatique (100 ; 400) selon la revendication 10, dans lequel les circuits de traitement (102 ; 402) sont en outre configurés pour :
établir un ou plusieurs points de cheminement sur la base des données d'itinéraire, et
sur la base des un ou plusieurs points de cheminement, commander la manœuvre automatique du navire (10) pendant l'état actif du mode de pilotage automatique.

12. Système de commande de pilotage automatique (100 ; 400) selon l'une quelconque des revendications précédentes, dans lequel les circuits de traitement (102 ; 402) sont configurés pour :
déterminer un temporisateur de réengagement de pilotage automatique, et
mettre le mode de pilotage automatique à l'état actif en réponse au positionnement du gouvernail (12) dans la valeur limite de la valeur d'angle de gouvernail de pilotage automatique pendant une période déterminée par le temporisateur de réengagement de pilotage automatique.

13. Système de commande de pilotage automatique (100 ; 400) selon l'une quelconque des revendications précédentes, dans lequel les circuits de traitement (102 ; 402) sont configurés pour provoquer la génération d'un retour sensoriel à un opérateur du navire (10) en réponse à la position du gouvernail (12) dans la valeur limite de la valeur d'angle de gouvernail de pilotage automatique.

14. Navire (10) comprenant le système de commande de pilotage automatique (100 ; 400) selon l'une quelconque des revendications 1 à 13.

15. Procédé mis en œuvre par ordinateur (200) pour la commande du pilotage automatique d'un navire (10), le procédé (200) comprenant :
réception (210), par les circuits de traitement (102 ; 402) d'un système de commande de pilotage automatique (100 ; 400), d'une demande d'annulation manuelle du pilotage automatique (r_{cancel}) en réponse à un écart du gouvernail (12) du navire (10) par rapport à une valeur limite d'une valeur d'angle de gouvernail de pilotage automatique, dans lequel la valeur d'angle de gouvernail de pilotage automatique se rapporte à un mode de pilotage automatique du navire (10) ;
en réponse à la réception de la demande d'annulation manuelle du pilote automatique (r_{cancel}), le réglage (220), par les circuits de traitement (102 ; 402), du mode de pilotage automatique à un état de pause, l'état de pause permettant la manœuvre manuelle du navire (10) ;
**caractérisé en ce que** le procédé comprend en outre :
la réception (230), par les circuits de traitement (102 ; 402), d'une demande de réengagement manuelle de pilotage automatique (r_{engage}) en réponse au positionnement du gouvernail (12) dans une valeur limite de la valeur d'angle de gouvernail de pilotage automatique ; et
en réponse à la réception de la demande de réengagement manuelle de pilotage automatique (r_{engage}), le réglage (240), par les circuits de traitement (102 ; 402), du mode de pilotage automatique à un état actif, l'état actif entraînant la manœuvre automatique du navire (10).
